# EUROPÄISCHE PATENTANMELDUNG

(11) **EP 3 312 250 A1**
(43) Veröffentlichungstag der Anmeldung: **25.04.2018**
(21) Anmeldenummer: 16195068.8
(22) Anmeldetag: 21.10.2016
(51) Int. Cl.: C09J 7/02, E04F 15/02, E04F 15/18, E04F 15/22

(54) **EINSEITIG SELBSTKLEBENDE DAMPFBREMSE ZUM ABSPERREN VON RESTFEUCHTEN BÖDEN**

(71) Anmelder: Uzin Tyro AG, 6374 Buochs (CH)
(72) Erfinder: Wigger, Thomas, 6232 Geuensee (CH)
(74) Vertreter: Isarpatent

(57) **Zusammenfassung**

Die Erfindung betrifft eine einseitig selbstklebende Dampfbremse, umfassend mindestens eine Bremsschicht gegenüber Feuchtigkeit, eine Trägerfolie und eine erste Haftkleberschicht, welche gegenüber Feuchtigkeit beständig ist, wobei sich auf der der ersten Haftkleberschicht gegenüberliegenden Seite der Trägerfolie eine strukturierte Oberfläche und/oder eine Schicht mit Struktur befindet.

## Beschreibung

Die vorliegende Erfindung betrifft eine einseitig selbstklebende Dampfbremse, umfassend mindestens eine Bremsschicht gegenüber Feuchtigkeit, eine Trägerfolie und eine erste Haftkleberschicht, welche gegenüber Feuchtigkeit beständig ist, wobei sich auf der der ersten Haftkleberschicht gegenüberliegenden Seite der Trägerfolie eine strukturierte Oberfläche und/oder eine Schicht mit Struktur befindet.

Für die Herstellung neuer Betonböden und Estriche werden erhebliche Mengen Wasser benötigt, um eine einbringbare Konsistenz zu erreichen. Ein großer Teil dieses Wassers muss nach dem Abbindeprozess verdunsten, bzw. abtrocknen, bevor weitere Schichten aufgebracht werden können oder bevor schlussendlich ein Bodenbelag aufgebracht werden kann. Die vollständige Austrocknung von Betonplatten benötigt viele Monate bis ca. 3 Jahre. Die vollständige Austrocknung von Estrichen benötigt je nach Dicke, Konstruktion, Zusammensetzung und vorliegendem Raumklima mehrere Wochen bis Monate. Um die nächsten Schichten auf den Boden aufbauen zu können, muss üblicherweise jeweils die Feuchte des Bodens, zum Beispiel eines Betonbodens oder eines Estrichs, unter ein vorgegebenes Mass abgetrocket sein.

Um die Wartezeit weiter zu verkürzen, werden restfeuchte Estriche und/oder Betonböden mit zum Beispiel reaktiven Dampfbremsen versehen, zum Beispiel mit 2K(2-Komponenten)-Epoxy, 2K-PU (Polyurethan) oder allenfalls 1K-PU oder 1K-Silan Beschichtungen. Diese müssen je nach benötigter Bremswirkung in mehreren Schichten aufgetragen werden. Die letzte Schicht wird üblicherweise abgesandet. Nach dem Abkehren von losem Sand kann dann gespachtelt werden und auf die ausgetrocknete Spachtelmasseschicht kann, zum Beispiel mit einem Dispersionsklebstoff oder einem Reaktivklebstoff, zum Beispiel ein elastischer Bodenbelag, ein Teppich oder ein Parkett geklebt werden.

Reaktive Dampfbremsen und Dampfsperrsysteme sind jedoch bei der Verarbeitung oft gesundheitlich bedenklich, da teilweise gesundheitsschädliche, reizende, toxische oder mutagene Vernetzer eingesetzt werden. Zudem werden gewöhnlich für jeden Schichtauftrag Trocknungszeiten von bis zu 24 h benötigt, um mit dem nächsten Arbeitsgang fortfahren zu können.

Zwischen Betonplatte und Estrich werden oftmals Dampfbremsfolien lose verlegt, um den Estrich vor der Feuchtigkeit der Betonplatte zu schützen. Auf den Estrichen oder auf gespachtelten Untergründen werden teilweise auch sogenannte Unterlagen mit dampfbremsenden Eigenschaften verwendet, die entweder einseitig selbstklebend ausgerüstet sind und auf den Untergrund geklebt werden, oder nicht klebende Unterlagen sind, welche lose auf dem Untergrund verlegt oder auf dem Untergrund nass bzw. konventionell geklebt werden. Auf diese Unterlagen kann anschließend, zum Beispielmit Nassklebstoffen, bzw. konventionellen Klebstoffen, ein Bodenbelag geklebt werden. Dies erfordert lange Trocknungszeiten, da diese Unterlagen die Feuchtigkeit aus den Klebstoffen nicht aufnehmen können bzw. sogenannt "nicht saugend" sind. Diese Unterlagen sind oftmals 1 bis 5 mm dick und weisen teilweise auch trittschalldämmende Eigenschaften auf. Insbesondere muss üblicherweise nach der Verlegung des Bodenbelages noch mindestens 24 bis 72 Stunden abgewartet werden bevor der frisch verlegte Bodenbelag belastet werden kann. Ansonsten ist mit Verdrückungen der Klebstoffschicht und/oder einem schlechten optischen Ergebnis zu rechnen. Wegen der Dicke und Duktilität der Unterlagen sind viele Bodenbeläge nicht darauf verlegbar.

Diese Unterlagen sind zwar schnell verlegbar, aber bieten keinen ausreichenden Verlegekomfort. In den meisten Fällen weisen sie ein nur geringfügiges und daher ungenügendes Vermögen zum Ausgleichen von Unebenheiten auf, sodass im Allgemeinen ein gespachtelter oder plan geschliffener Untergrund für die Aufnahme der Dampfbremse vorliegen muss.

Dampfbremsen für verschiedene Untergründe sind beispielsweise aus der DE 10 2011 011292 A1 bekannt.

Es besteht ein Bedarf, ein Dampfbremssystem bereitzustellen, welches eine schnelle Verlegung desselben auf rohen, restfeuchten Untergründen, wie zum Beispiel Beton oder Zementestrichen, ohne zusätzliche Trocknungszeiten und Wartezeiten erlaubt, und darauf direkt mit üblichen, mineralischen Spachtelmassen gespachtelt werden kann. Auf dieser Spachtelmasse sollen im Anschluss Bodenbeläge aller Art geklebt werden können. Alternativ soll auf dem Dampfbremssystem direkt ein Belag wie zum Beispiel ein Parkett mit zum Beispiel einem reaktiven Klebstoff geklebt werden können. Durch das Dampfbremssystem soll der restfeuchte Untergrund ausreichend abgedichtet werden, sodass auf dem Dampfbremssystem schnell ein Boden, ggf. nach Auftrag von Spachtelmasse zum Angleichen des Bodenniveaus, verlegt werden kann, wobei hierbei auch Unebenheiten des restfeuchten Untergrunds toleriert werden können.

Die Erfindung betrifft eine einseitig selbstklebende Dampfbremse mit einer Dampfbremse, bevorzugt einer Dampfsperre, die schnell und einfach zum Ziel führt, wobei direkt auf die selbstklebende Dampfbremse gespachtelt und/oder geklebt werden kann. Dazu sind vorteilhafterweise keinerlei Wartezeiten oder Trocknungszeiten erforderlich.

Gemäß einem ersten Aspekt betrifft die vorliegende Erfindung eine selbstklebende Dampfbremse, umfassend:
- mindestens eine Trägerfolie;
- mindestens eine Bremsschicht gegenüber Feuchtigkeit; und
- eine erste Haftkleberschicht, welche gegenüber Feuchtigkeit beständig ist und sich auf einer der Umgebung zugewandten Seite der selbstklebenden Dampfbremse befindet, wobei auf die Trägerfolie auf einer der Umgebung zugewandten Seite der selbstklebenden Dampfbremse auf der der ersten Haftkleberschicht gegenüberliegenden Seite eine textile Struktur und optional eine Polysiloxanschicht und/oder andere eine Verblockung mindernde Schicht und/oder eine entfernbare Abdeckschicht aufgebracht ist und/oder die Trägerfolie auf der der ersten Haftkleberschicht gegenüberliegenden Seite strukturiert ist und optional eine Polysiloxanschicht und/oder andere eine Verblockung mindernde Schicht und/oder eine entfernbare Abdeckschicht aufweist,
wobei die erste Haftkleberschicht nach Auftragung auf eine feuchtigkeitsgesättigte Faserzementplatte einen Schälwiderstand gemessen analog DIN EN 1939:2003 von
≥ 3.0 N/25 mm aufweist, und
wobei die erste Haftkleberschicht nach beschleunigter Alterung auf einer feuchtigkeitsgesättigten Faserzementplatte für 20 Tage, bevorzugt für 28 Tage, weiter bevorzugt für 41 Tage, bei 50°C unter Erhalt der Feuchtigkeit einen Schälwiderstand gemessen analog DIN EN 1939:2003 von ≥ 3.0 N/25 mm aufweist.

Gemäß einem weiteren Aspekt betrifft die vorliegende Erfindung die Verwendung der erfindungsgemäßen, selbstklebenden Dampfbremse zum Verlegen auf einem restfeuchten Untergrund.

Zudem betrifft die vorliegende Erfindung ein Verfahren zum Aufbringen einer selbstklebenden Dampfbremse auf einem restfeuchten Untergrund, umfassend:
- Aufbringen der erfindungsgemäßen, selbstklebenden Dampfbremse auf den restfeuchten Untergrund, wobei die erste Haftkleberschicht auf dem restfeuchten Untergrund aufgebracht wird, wobei ggf. die entfernbare Abdeckschicht oder die entfernbaren Abdeckschichten vor, während oder nach dem Aufbringen der selbstklebenden Dampfbremse entfernt wird bzw. entfernt werden.

Weitere Aspekte der vorliegenden Erfindung sind den abhängigen Ansprüchen und der detaillierten Beschreibung zu entnehmen.

Der erste Aspekt der vorliegenden Erfindung betrifft eine selbstklebende Dampfbremse, umfassend:
- mindestens eine Trägerfolie;
- mindestens eine Bremsschicht gegenüber Feuchtigkeit; und
- eine erste Haftkleberschicht, welche gegenüber Feuchtigkeit beständig ist und sich auf einer der Umgebung zugewandten Seite der selbstklebenden Dampfbremse befindet, wobei auf die Trägerfolie auf einer der Umgebung zugewandten Seite der selbstklebenden Dampfbremse auf der der ersten Haftkleberschicht gegenüberliegenden Seite eine textile Struktur und optional eine Polysiloxanschicht und/oder andere eine Verblockung mindernde Schicht und/oder eine entfernbare Abdeckschicht aufgebracht ist und/oder die Trägerfolie auf der der ersten Haftkleberschicht gegenüberliegenden Seite strukturiert ist und optional eine Polysiloxanschicht und/oder andere eine Verblockung mindernde Schicht und/oder eine entfernbare Abdeckschicht aufweist,
wobei die erste Haftkleberschicht nach Auftragung auf eine feuchtigkeitsgesättigte Faserzementplatte einen Schälwiderstand gemessen analog DIN EN 1939:2003 von
≥ 3.0 N/25 mm, bevorzugt ≥ 6.0 N/25 mm, aufweist, und
wobei die erste Haftkleberschicht nach beschleunigter Alterung auf einer feuchtigkeitsgesättigten Faserzementplatte für 20 Tage, bevorzugt für 28 Tage, weiter bevorzugt für 41 Tage, bei 50°C unter Erhalt der Feuchtigkeit einen Schälwiderstand gemessen analog DIN EN 1939:2003 von ≥ 3.0 N/25 mm, bevorzugt ≥ 6.0 N/25 mm, aufweist.

Eine selbstklebende Dampfbremse ist hierbei eine Folie, welche durch mindestens eine Haftkleberschicht in der Lage ist, auf einem Untergrund zu haften. Zudem ist die erste Haftkleberschicht gegenüber Feuchtigkeit beständig, indem eine ausreichende Befestigung an einem restfeuchten Untergrund gewährleistet wird, welche beispielsweise anhand des Schälwiderstands bestimmt werden kann. Diese Beständigkeit ist auch nach Alterung gegeben.

Als Dampfbremse wird eine Bremse gegenüber migrierender bzw. diffundierender Feuchtigkeit verstanden; zum Beispiel allgemein gegenüber einer Diffusion von Wasser verstanden, zum Beispiel Osmose.

Die Messung des Schälwiderstands erfolgt erfindungsgemäß analog DIN EN 1939:2003 unter Verwendung der identischen Prüfverfahren, wobei jedoch projektspezifische Untergründe verwendet wurden. Mit den in der Norm angegebenen Materialien kann kein restfeuchter Untergrund simuliert werden, welcher beim tatsächlichen Verlegen der erfindungsgemäßen, selbstklebenden Dampfbremse in Kontakt kommt und in Verbindung tritt.

Normgemäß erfolgt die Messung nach Auftragung nach dem normativ angegebenen Verfahren oder nach beschleunigter Alterung. Die Prüfung erfolgt in jedem Fall bei Normklima, auch nach beschleunigter Alterung.

Auf Datenblättern werden zumeist Klebkräfte auf Normuntergründen wie zum Beispiel Stahl (V2A) oder Glas angegeben. Es hat sich gezeigt, dass die auf den Datenblättern angegebenen Messwerte lediglich als Ausgangspunkt für eine grobe Klebstoffselektion dienen können und diese jeweils spezifisch geprüft werden müssen.

Es ist durchaus üblich, dass im Rahmen einer Produktentwicklung die Klebeeigenschaften der jeweiligen Haftklebstoffe auf den projektspezifischen Untergründen sowie den projektspezifischen Bodenbelägen sowie die Beständigkeit gegenüber den im geplanten Einsatz auftretenden Bedingungen geprüft werden müssen für eine Klebstoffselektion. Ganz besonders gilt dies für Klebstoffe, welche auf restfeuchte Untergründe geklebt werden sollen. Für die vorliegende Messung des Schälwiderstands wird somit anstelle eines Untergrunds aus nichtrostendem Stahl eine feuchtigkeitsgesättigte Faserzementplatte verwendet.

Darüber hinaus erfolgt die Messung jedoch gemäß DIN EN 1939:2003. Dazu wurden Prüfkörper gemäß DIN EN 1939:2003 hergestellt und auf trockenen sowie feuchtigkeitsgesättigten Faserzementplatten geklebt und geprüft gemäß den in DIN EN 1939:2003 beschriebenen Verfahren.

Die Feuchtigkeitssättigung der Faserzementplatte kann hierbei beispielsweise dadurch erreicht werden, dass die Faserzementplatte derart in, beispielsweise entionisiertes, Wasser gelegt wird, dass sie gerade nicht oder gerade eben mit Wasser bedeckt ist, also bis zu einer oberen Kante an allen Seiten von Wasser umgeben ist oder auch die Oberseite der Faserzementplatte gerade von einer minimalen Menge an Wasser, beispielsweise einem Wasserspiegel mit einer Höhe von weniger als 1 cm, zum Beispiel weniger als 0,5 cm, 0,3 cm oder 0,1 cm, bedeckt ist. Auf der Unterseite kann sich die Faserzementplatte auf dem Boden eines geeigneten Behälters für das Wasser befinden, welcher bevorzugt nicht in das System aus Wasser und Faserzement eingreift und bevorzugt auch nicht mit dem Wasser reagiert, zum Beispiel ein Behälter aus nichtrostendem Stahl.

Als Faserzementplatte wird hierbei eine handelsübliche, unbehandelte Faserzementplatte angesehen, zum Beispiel Eterplan von Eternit.

Gemäß bestimmten Ausführungsformen weist die erste Haftkleberschicht zudem nach Auftragung auf eine trockene Faserzementplatte einen Schälwiderstand gemessen analog DIN EN 1939:2003 von ≥ 3.0 N/25 mm, bevorzugt ≥ 6.0 N/25 mm, auf.

Für das Funktionieren der langjährigen Klebung auf feuchten Untergründen sollte nicht nur die Anfangshaftung ausreichend sein, sondern es sollte auch gewährleistet sein, dass die benötigten Klebeeigenschaften über die ganze Lebensdauer von einem darauf zu verlegenden Bodenbelag erhalten bleiben. Die Lebensdauer von Bodenbelägen kann bis zu 20 Jahre sein, wobei oftmals der Belag nach 5-10 Jahre verschlissen ist und gewechselt werden sollte.

Die Beständigkeit der ersten Haftkleberschicht der erfindungsgemäßen, selbstklebenden Dampfbremse mit der Bremsschicht für bzw. gegenüber Feuchtigkeit, beispielsweise auch als Dampfbremse bezeichnet, kann dadurch bestimmt werden, dass Schälprüfkörper angelehnt an die DIN EN 1939:2003 auf feuchten Faserzementplatten hergestellt werden und diese bei erhöhter Temperatur in feuchtem Zustand beschleunigt gealtert werden. Die Lagerdauer sollte hierzu auf die zu erwartende Einsatzdauer abgestimmt werden.

Die erste Haftkleberschicht weist daher zudem nach beschleunigter Alterung auf einer feuchtigkeitsgesättigten Faserzementplatte für 20 Tage, bevorzugt für 28 Tage, weiter bevorzugt für 41 Tage, bei 50°C unter Erhalt der Feuchtigkeit einen Schälwiderstand gemessen analog DIN EN 1939:2003 von ≥ 3.0 N/25 mm, bevorzugt ≥ 6.0 N/25 mm, auf. Hierbei erfolgt ebenfalls die Herstellung der Prüfkörper gemäß DIN EN 1939:2003, wobei diese dann für 20 Tage, bevorzugt für 28 Tage, weiter bevorzugt für 41 Tage, bei 50°C unter Erhalt der Feuchtigkeit gealtert werden. Die Lagerung bzw. Alterung für 20 Tage, bevorzugt für 28 Tage, weiter bevorzugt für 41 Tage, bei 50°C unter Erhalt der Feuchtigkeit bildet hierbei eine langandauernde Feuchtigkeitseinwirkung ab. Ein Erhalt der Feuchtigkeit stellt hierbei sicher, dass die Faserzementplatte wie auch weitere Bestandteile des Prüfkörpers nicht austrocknen und die Feuchtigkeitssättigung der Faserzementplatte erhalten bleibt, und kann auf geeignete Weise sichergestellt werden, beispielsweise durch entsprechendes Nachbefeuchten und/oder Lagern in einem geschlossenen Raum mit kontrollierter Feuchtigkeit. Nach der Alterung erfolgt wiederum die Prüfung des Schälwiderstands gemäß den in DIN EN 1939:2003 beschriebenen Verfahren.

Gemäß bestimmten Ausführungsformen nimmt der Schälwiderstand bei der beschleunigten Alterung auf einer feuchtigkeitsgesättigten Faserzementplatte für 20 Tage, bevorzugt für 28 Tage, weiter bevorzugt für 41 Tage bei 50°C unter Erhalt der Feuchtigkeit nicht ab im Vergleich zum Zeitpunkt der Messung nach Auftragung, beispielsweise 15 Minuten nach Auftragung, auf eine feuchtigkeitsgesättigte Faserzementplatte.

Auf mineralischen Untergründen, wie zum Beispiel Beton, Zementestrich, zementären Spachtelmassen, etc., können sowohl die Oberfläche als auch die migrierende Feuchtigkeit alkalisch sein. pH Werte zwischen 8.0 und 13.5 sind durchaus üblich und in der Praxis vorhanden. Die pH Werte der Oberflächen oder auch von migrierender Feuchtigkeit können hierbei gemäß ASTM F710-11, Absatz 5.2 (ASTM F710-11, Standard Practice for Preparing Concrete Floors to Receive Resilient Flooring, ASTM International, West Conshohocken, PA, 2011) mit einem geeigneten pH-Teststreifen gemessen werden.

Insbesondere hat die erste Haftkleberschicht daher zudem eine ausreichende Beständigkeit gegenüber alkalischer Feuchtigkeit. Gemäß bestimmten Ausführungsformen ist die erste Haftkleberschicht daher gegenüber alkalischer Feuchtigkeit bei einem pH von gleich oder mehr als 8,0 und gleich oder weniger als 13,5, bevorzugt gleich oder mehr als 8,5 und gleich oder weniger als 13,0, beständig. Die Beständigkeit ist hierbei vorteilhafterweise sowohl zu Beginn eines Aufbringens bzw. Verlegens wie auch nach Alterung gegeben, sodass also die erste Haftkleberschicht nach Auftragung auf eine feuchtigkeitsgesättigte Faserzementplatte bei einem pH von gleich oder mehr als 8,0 und gleich oder weniger als 13,5, bevorzugt gleich oder mehr als 8,5 und gleich oder weniger als 13,0, einen Schälwiderstand gemessen analog DIN EN 1939:2003 von ≥ 3.0 N/25 mm, bevorzugt ≥ 6.0 N/25 mm, aufweist, und/oder die erste Haftkleberschicht nach beschleunigter Alterung auf einer feuchtigkeitsgesättigten Faserzementplatte für 20 Tage, bevorzugt für 28 Tage, weiter bevorzugt für 41 Tage bei 50°C unter Erhalt der Feuchtigkeit bei einem pH von gleich oder mehr als 8,0 und gleich oder weniger als 13,5, bevorzugt gleich oder mehr als 8,5 und gleich oder weniger als 13,0, einen Schälwiderstand gemessen analog DIN EN 1939:2003 von ≥ 3.0 N/25 mm, bevorzugt ≥ 6.0 N/25 mm, aufweist. Die Alkalinität zwischen pH 8,0 und 13,5 kann beispielsweise durch die Befeuchtung von Faserzementplatten mit entionisiertem Wasser erreicht werden.

Auch hierbei ist bevorzugt, dass der Schälwiderstand während der Alterung nicht abnimmt.

Da die erste Haftkleberschicht bei einem Verlegen mit dem restfeuchten Untergrund in Berührung kommt und deshalb vom restfeuchten Untergrund betrachtet in der erfindungsgemäßen, selbstklebenden Dampfbremse unten bzw. unter der Trägerfolie liegt, kann sie auch als untere Haftkleberschicht bezeichnet werden.

Für die erste Haftkleberschicht bedeutet der Begriff "der Umgebung zugewandt", so keine optionale entfernbare Abdeckschicht vorhanden ist, dass sich keine weitere Schicht mehr anschließt, welche zur erfindungsgemäßen, selbstklebenden Dampfbremse gehört, sondern diese eine Oberfläche der erfindungsgemäßen, selbstklebenden Dampfbremse bildet. Selbstverständlich kann diese bei einer weiteren Verarbeitung der selbstklebenden Dampfbremse, beispielsweise beim Verlegen, mit dem Untergrund in Berührung kommen, welcher dann als Umgebung zu verstehen ist. Die Umgebung muss also nicht zwingend Luft sein.

Die erste Haftkleberschicht ist hinsichtlich ihrer Ausbildung nicht besonders beschränkt und kann auch an einen restfeuchten Untergrund, auf den die erfindungsgemäße, selbstklebende Dampfbremse zu verlegen ist, angepasst sein, indem sie beispielsweise plan oder strukturiert ausgebildet ist, um ggf. eine bessere Verbindung zu einem rauen Untergrund zu erhalten.

Gemäß bestimmten Ausführungsformen weist die erste Haftkleberschicht eine Klebstoffauftragsmasse von 10 - 200 g/m², bevorzugt 30 - 200 g/m², auf, wobei diese gemäß bestimmten Ausführungsformen, beispielsweise je nach Anwendungsbereich und Untergrund, 40 - 180 g/m² oder 50 - 160 g/m² sein kann.

Das Material der ersten Haftkleberschicht ist nicht besonders beschränkt, insofern es die entsprechende Feuchtigkeitsbeständigkeit der ersten Haftkleberschicht erbringt und auf einem restfeuchten, bevorzugt mineralischen, Untergrund haftet, und kann auch Materialmischungen umfassen. Die erste Haftkleberschicht liegt gemäß bestimmten Ausführungsformen als Schmelzklebstoff, lösemittelbasierter Klebstoff oder Dispersionsklebstoff, bevorzugt als Schmelzklebstoff oder lösemittelbasierter Klebstoff, besonders bevorzugt als Schmelzklebstoff, vor, welche rein physikalisch härtend und/oder chemisch und/oder physikalisch nachvernetzend ausgerüstet sind.

Gemäß bestimmten Ausführungsformen kann die erste Haftkleberschicht aus einem Haftklebermaterial bestehen oder dieses umfassen, welches ausgewählt ist aus der Gruppe bestehend aus Haftklebstoffen basierend auf Kautschuk, Naturkautschuk Synthesekautschuk wie zum Beispiel Styrol-Butadien-Blockcopolymeren (SBS), Acrylat, Chloropren-Kautschuk, Polyurethan, Styrolacrylat, Vinylacetat, Vinylacetat-Ethylen, Vinylversatat, Polyethylenvinylacetat, Polyethylenvinylversatat, Polyacrylat, und/oder deren Mischungen und/oder deren Copolymerisaten, bevorzugt Haftklebestoffen basierend auf Kautschuk, Naturkautschuk Synthesekautschuk wie zum Beispiel SBS Blockcopolymeren, Polyurethan, Polyacrylat, Polyethylenvinylacetat, Polyethylenvinylversatat und/oder deren Mischungen und/oder deren Copolymerisaten, besonders bevorzugt Haftklebstoffen basierend auf Kautschuk, Naturkautschuk Synthesekautschuk wie zum Beispiel SBS Blockcopolymeren, Chloropren-Kautschuk und/oder deren Mischungen und/oder deren Copolymerisaten, wobei hierbei wiederum Schmelzklebstoffe (Hotmelts) und/oder lösemittelbasierte Klebstoffe bevorzugt sind.

Neben der ersten Haftkleberschicht umfasst die erfindungsgemäße, selbstklebende Dampfbremse weiterhin mindestens eine Trägerfolie. Die Trägerfolie kann hierbei in Form einer einschichtigen oder mehrschichtigen Folie mit zwei oder mehr Schichten oder auch als Verbundwerkstoff ausgebildet sein.

Gemäß bestimmten Ausführungsformen umfasst die Trägerfolie einen oder mehrere, zum Beispiel einen, Folienträger, auf welchen eine oder mehrere verschiedene Schichten wie die erste Haftkleberschicht, eine oder mehrere Bremsschichten gegenüber Feuchtigkeit, zum Beispiel eine Bremsschicht gegenüber Feuchtigkeit, und/oder eine textile Struktur aufgebracht werden können, wobei die textile Struktur als separate Schichten ausgebildet sein kann oder Teil der Trägerfolie sein kann, die Bremsschicht gegenüber Feuchtigkeit wiederum jedoch auch als Teil der Trägerfolie mit dem Folienträger oder einer anderen Schicht in einem Mehrschichtverbund verbunden sein kann, also in die Trägerfolie integriert sein kann oder Teil der Trägerfolie sein kann. Gemäß bestimmten Ausführungsformen besteht die Trägerfolie aus einem oder mehreren, zum Beispiel einem, Folienträger. Gemäß bestimmten Ausführungsformen kann auch der Folienträger selbst, so er als Bremse gegenüber Feuchtigkeit fungiert, als Bremsschicht gegenüber Feuchtigkeit vorgesehen sein, also sowohl als Trägerfolie wie auch als Bremsschicht gegenüber Feuchtigkeit fungieren. Gemäß bestimmten Ausführungsformen unterscheiden sich Folienträger und Bremsschicht gegenüber Feuchtigkeit.

Das Material des Folienträgers ist hierbei nicht besonders beschränkt, insofern die weiteren Schichten aufgebracht werden können. Beispielsweise kann der Folienträger als Metallfolie bzw. Metallschicht oder Polymerfolie ausgebildet sein. Als Polymer kann das Material auch geschäumt sein. Gemäß bestimmten Ausführungsformen besteht der Folienträger oder die Trägerfolie aus einem Polymermaterial.

Das Polymer des Folienträgers oder der Trägerfolie ist hierbei nicht besonders beschränkt und kann beispielsweise Polymermaterialien umfassen bzw. aus Polymermaterialien bestehen, welche ausgewählt sind aus der Gruppe, bestehend aus Polyethylen (PE), Polypropylen (PP), aromatische und/oder aliphatische Polyamide (PA), aliphatische und/oder aromatische Polyester (PES), Polyethylenpropylen (PEP), Polyethylenterephthalat (PET), Polylactid (PLA), Polymethylmethacrylat (PMMA), Polyolefine (PO), Polyvinylbutyral (PVB), Polybutadien, Neopren, Latex, Nitrilkautschuk (NBR), Styrol-Butadien-Kautschuk (SBR), Polyvinylchlorid (PVC), Polycarbonat (PC), Polyacrylsäureester (PAA), Polyacrylnitril (PAN), Polyamidimid (PAI), Polybutylacrylat (PBA), Polyesteramid (PEA), Polyetherimid (PEI), Polyetherketon (PEK), Polyethercarbonat (PEC), Polyimid (PI), Polyacrylesterimid wie zum Beispiel Polymethacrylmethylimid (PMMI), Polyoxymethylen (POM), Polyphenylvinyl (PPV), Polystyrol (PS), Polyurethan (PUR), Polyvinylacetat (PVAC), Polyvinylalkohol (PVOH), Polyvinylfluorid (PVF) oder Copolymeren und/oder Mischungen davon, bevorzugt aus der Gruppe bestehend aus Polyethylen (PE), Polypropylen (PP), aromatische und/oder aliphatische Polyamide (PA), aliphatische und/oder aromatische Polyester (PES), Polyethylenpropylen (PEP), Polyethylenterephthalat (PET), Polylactid (PLA), Polyacrylnitril (PAN), Polymethylmethacrylat (PMMA), Polyolefine (PO), Polyvinylbutyral (PVB), Polybutadien, Neopren, Latex und/oder Polyvinylchlorid (PVC) und/oder Copolymeren und/oder Mischungen davon. Gemäß bestimmten Ausführungsformen umfasst der Folienträger oder die Trägerfolie Polyethylen (PE), Polypropylen (PP), Polyethylenpropylen (PEP), Polyolefine (PO), Polyvinylchlorid (PVC), Polyacrylnitril (PAN), Latex, Nitrilkautschuk (NBR) und/oder Styrol-Butadien-Kautschuk (SBR) und/oder Copolymeren und/oder Mischungen davon und/oder besteht daraus.

Falls für den Folienträger oder die Trägerfolie oder eine Schicht in einer mehrschichtigen Trägerfolie ein Schaum eingesetzt wird oder mit eingesetzt wird, so besteht der Schaum bevorzugt aus einem Polymermaterial aus der Gruppe Polyethylen (PE), Polypropylen (PP), aromatische und/oder aliphatische Polyamide (PA), aliphatische und/oder aromatische Polyester (PES), Polyethylenpropylen (PEP), Polyether, Polyurethan, Polyethylenterephthalat (PET), Polylactid, Polyolefine, Polyvinylbutyral, Polybutadien, Neopren, Latex und/oder Polyvinylchlorid und/oder Copolymeren und/oder Mischungen davon.

So beispielsweise das Material des Folienträgers oder der Trägerfolie empfindlich gegenüber Weichmachern ist, umfasst die erfindungsgemäße, selbstklebende Dampfbremse gemäß bestimmten Ausführungsformen weiter mindestens eine Sperrschicht, welche für Weichmacher undurchlässig ist. Gemäß bestimmten Ausführungsformen umfasst die erfindungsgemäße, selbstklebende Dampfbremse weiter mindestens eine Sperrschicht, welche für Weichmacher undurchlässig ist. Es ist nicht ausgeschlossen, dass mehrere Sperrschichten für Weichmacher vorgesehen sind. Eine solche Sperrschicht gegenüber Weichmacher befindet sich bevorzugt auf einer Seite der selbstklebenden Dampfbremse, von der nach dem Verlegen und Verarbeiten der selbstklebenden Dampfbremse ein Weichmachereintrag zu befürchten oder zu erwarten ist, also beispielsweise von der Oberseite aus verschiedenen Bodenbelägen, welche der Seite entspricht, auf der eine textile Struktur und optional eine Polysiloxanschicht aufgebracht ist und/oder die Trägerfolie strukturiert ist und optional eine Polysiloxanschicht aufweist. So ein Weichmachereintrag aus Richtung des Bodens zu befürchten ist, kann auch eine Sperrschicht, welche für Weichmacher undurchlässig ist, auf dem Folienträger oder der Trägerfolie in Richtung der ersten Haftkleberschicht hin angeordnet sein. Eine Sperrschicht, welche für Weichmacher undurchlässig ist, ist hierbei bevorzugt eine Schicht, welche keinen Weichmacher durchlässt.

Das Material der Sperrschicht, welche für Weichmacher undurchlässig ist, ist hierbei nicht besonders beschränkt, so es einen Weichmacherdurchtritt verhindert, und ist beispielsweise polymer, metallisch und/oder keramisch, also umfasst ein oder mehrere Polymere, Metalle und/oder Keramiken und/oder besteht daraus. Als Sperrschicht, welche für Weichmacher undurchlässig ist, kann beispielsweise eine Schicht dienen, welche ein Metall, ein Metalloxid und/oder ein Polymer umfassend Polyethylenterephthalat (PET), aromatische und/oder aliphatische Polyamide (PA), aliphatische und/oder aromatische Polyester (PES), Polymethylmethacrylat (PMMA), Polyacrylnitril (PAN), Polyvinylchlorid (PVC), Polycarbonat (PC), Polyurethan (PUR), Polyvinylacetat (PVAC), Polyvinylalkohol (PVOH) und/oder Copolymere und/oder Mischungen davon, bevorzugt Polyethylenterephthalat (PET), aromatische und/oder aliphatische Polyamide (PA), Polyacrylnitril (PAN), Polyvinylalkohol (PVOH) und/oder Polymethylmethacrylat (PMMA) und/oder Copolymere und/oder Mischungen davon enthält und/oder daraus besteht.

Gemäß bestimmten Ausführungsformen ist die mindestens eine Sperrschicht, welche für Weichmacher undurchlässig ist, eine Polymerschicht, welche eine Dicke von 1 bis 200 µm aufweist, und/oder eine Metall- oder Metalloxidschicht, welche eine Dicke von 10 nm bis 100 µm aufweist, bevorzugt eine Polymerschicht, welche eine Dicke von10 µm bis zu 150 µm, bevorzugt 15 bis 100 µm, weiter bevorzugt 20 bis 60 µm, aufweist, und/oder eine Metall- oder Metalloxidschicht, welche eine Dicke von 15nm bis 50 µm, bevorzugt 20 nm - 30 µm aufweist.

Gemäß bestimmten Ausführungsformen ist die mindestens eine Bremsschicht für Feuchtigkeit und/oder die optionale mindestens eine Sperrschicht, welche für Weichmacher undurchlässig ist, in die Trägerfolie integriert. Diese können also beispielsweise auf den Folienträger und/oder eine andere Schicht in einem mehrschichtigen Aufbau der Trägerfolie aufgebracht sein, oder der Folienträger kann eine oder beide Funktionen, also die Weichmachersperre und/oder die Bremse gegen Feuchtigkeit, übernehmen. Somit kann die Trägerfolie mindestens eine weichmachersperrende Schicht, also eine Sperrschicht, welche für Weichmacher undurchlässig ist, insbesondere eine Schicht, welche eine sperrende Wirkung gegenüber migrationsfähigen organischen Stoffen aufweist, und/oder mindestens eine Bremsschicht für Feuchtigkeit, insbesondere eine Schicht, welche eine sperrende Wirkung gegenüber Wasserdampf aufweist, enthalten.

Gemäß bestimmten Ausführungsformen weist die Trägerfolie bei einer Messung der Druckfestigkeit gemäß DIN EN ISO 24343-1:2012 einen Eindruck nach statischer Belastung von ≥ 0.1mm sowie einen Resteindruck nach statischer Belastung von ≥ 0.1mm auf. Hierdurch kann ein guter Auftrag von Spachtelmasse und/oder Klebstoff, etc., oder ein gutes Aufbringen eines Bodenbelags nach einem Verlegen der erfindungsgemäßen, selbstklebenden Dampfbremse erzielt werden. Insbesondere kann damit sichergestellt werden, dass die Trägerfolie nicht zu elastisch und/oder zu komprimierbar ist, um eine einfache Auftragung von Spachtelmasse und/oder Klebstoff, etc. zu ermöglichen. Insbesondere ist hierbei die Trägerfolie nicht geschäumt und/oder umfasst keine geschäumten Schichten, welche zu einer zu hohen Verformbarkeit bzw. Duktilität führen.

Gemäß bestimmten Ausführungsformen weist der Folienträger bei einer Messung der Druckfestigkeit gemäß DIN EN ISO 24343-1:2012 einen Eindruck nach statischer Belastung von ≥ 0.1mm sowie einen Resteindruck nach statischer Belastung von ≥ 0.1mm auf.

Für die DIN EN ISO 24343-1:2012 kann hierbei auch bezüglich der Messung auf die SIA 253.011 verwiesen werden.

In der erfindungsgemäßen, selbstklebenden Dampfbremse ist auf die Trägerfolie auf einer der Umgebung zugewandten Seite der selbstklebenden Dampfbremse auf der der ersten Haftkleberschicht gegenüberliegenden Seite eine textile Struktur und optional eine Polysiloxanschicht und/oder andere eine Verblockung mindernde Schicht, wie etwa eine Teflonschicht, und/oder eine entfernbare Abdeckschicht aufgebracht und/oder ist die Trägerfolie auf der der ersten Haftkleberschicht gegenüberliegenden Seite strukturiert, und weist optional eine Polysiloxanschicht und/oder eine andere eine Verblockung mindernde Schicht und/oder eine entfernbare Abdeckschicht auf. Beim Verlegen auf den Untergrund entspricht dies der oberen Seite der selbstklebenden Dampfbremse. Hierbei bedeutet der Begriff "der Umgebung zugewandt", dass sich keine weitere Schicht mehr anschließt, welche zur erfindungsgemäßen, selbstklebenden Dampfbremse gehört, sondern diese textile Struktur oder optionale Polysiloxanschicht und/oder andere eine Verblockung mindernde Schicht und/oder entfernbare Abdeckschicht und/oder Strukturierung mit optionaler Polysiloxanschicht und/oder anderer eine Verblockung mindernden Schicht und/oder entfernbaren Abdeckschicht eine Oberfläche der erfindungsgemäßen, selbstklebenden Dampfbremse bildet.

Selbstverständlich kann diese bei einer weiteren Verarbeitung der selbstklebenden Dampfbremse wiederum bedeckt werden, beispielsweise mit Spachtelmasse, Klebstoff, etc., sodass die Umgebung hierbei nicht nur Luft sein muss. Ebenfalls kann diese Schicht in einem aufgerollten Zustand der selbstklebenden Dampfbremse in der Rolle der ersten Haftkleberschicht zumindest teilweise gegenüberliegen, wobei sie sich mit dieser bevorzugt jedoch nicht verbindet und beim Ausrollen der selbstklebenden Dampfbremse wieder von der ersten Haftklebeschicht löst.

Als entfernbare Abdeckschicht sind hierbei beispielsweise eine ablösbare Abdeckschicht oder eine schwach haftende, ablösbare Abdeckschicht denkbar.

Durch die Verwendung einer textilen Struktur und/oder die Strukturierung der Trägerfolie kann bei einem Aufrollen eine Verblockung vermieden werden und eine verbesserte Haftfreundlichkeit zu einem später aufzutragenden Material erzielt werden, wie etwa einer Spachtelmasse, einem Klebstoff oder einem Bodenbelag. Daher ist es bevorzugt, dass wenigstens die Trägerfolie auf einer der Umgebung zugewandten Seite der selbstklebenden Dampfbremse auf der der ersten Haftkleberschicht gegenüberliegenden Seite eine textile Struktur vorgesehen ist oder die Oberfläche der Trägerfolie strukturiert ist.

Die optionale Polysiloxanschicht und/oder andere eine Verblockung mindernde Schicht kann darüber hinaus ein Verblocken der Oberfläche verhindern oder vermindern, sodass eine solche Polysiloxanschicht und/oder andere eine Verblockung mindernde Schicht zumindest teilweise in Verbindung mit der textilen Struktur und/oder der strukturierten Oberfläche verwendet wird. Da eine Polysiloxanschicht und/oder andere eine Verblockung mindernde Schicht jedoch die Haftung eines später aufzutragenden Materials wie einer Spachtelmasse und/oder eines Klebstoffs herabsetzen kann, ist es bevorzugt, dass nicht die gesamte textile Struktur und/oder strukturierte Oberfläche der Trägerfolie, bevorzugt textile Struktur, mit Polysiloxan und/oder einem anderen die Verblockung mindernden Material wie Teflon behandelt wird, sondern bevorzugt weniger als 50%, weiter bevorzugt weniger als 20%, insbesondere weniger als 10% der Oberfläche der gesamten textilen Struktur und/oder strukturierten Oberfläche der Trägerfolie, bezogen auf die gesamte Oberfläche der textilen Struktur und/oder strukturierten Oberfläche der Trägerfolie behandelt ist, wobei eine Behandlung - bevorzugt für die textile Struktur, aber auch für die strukturiert Oberfläche - insbesondere in dem Bereich, der der Umgebung zugewandt ist, also beispielsweise bei einem Aufrollen der selbstklebenden Dampfbremse zumindest teilweise mit der ersten Haftkleberschicht in Berührung kommt, bevorzugt ist. Die tieferen Bereiche - bevorzugt für die textile Struktur, aber auch für die strukturiert Oberfläche - welche sich in Richtung erste Haftkleberschicht erstrecken, sind bevorzugt nicht mit Polysiloxan und/oder einem anderen die Verblockung mindernden Material behandelt.

Durch die Strukturierung der Oberfläche der oberen Schicht der Trägerfolie, d.h. auf der der Umgebung zugewandten Seite der selbstklebenden Dampfbremse auf der der ersten Haftkleberschicht gegenüberliegenden Seite, auch durch Verwendung einer textilen Struktur und/oder die Behandlung mit einem die Verblockung mindernden Material, wie zum Beispiel Polysiloxan, wird es ermöglicht, dass auf die erste Haftkleberschicht keine entfernbare Abdeckschicht aufgebracht werden muss, welche haftungsmindernd wirken kann, wodurch Probleme beispielsweise bei einem Aufrollen, etc. der erfindungsgemäßen, selbstklebenden Dampfbremse durch Kontaktierung der ersten Haftkleberschicht mit der gegenüberliegenden Oberfläche vermindert oder verhindert werden können, so dass beispielsweise Rollen wieder gut abgerollt werden können. Gemäß bestimmten Ausführungsformen ist hierbei die Haftung der ersten Haftkleberschicht auf der der Umgebung zugewandten Seite der selbstklebenden Dampfbremse auf der der ersten Haftkleberschicht gegenüberliegenden Seite mit der textilen Struktur und/oder Polysiloxanschicht und/oder anderen eine Verblockung mindernden Schicht und/oder Strukturierung der Trägerfolie auf der der ersten Haftkleberschicht gegenüberliegenden Seite derart, dass bei einer Messung des Schälwiderstands, gemessen analog DIN EN 1939:2003, Werte von ≥ 5.0 N/25mm, bevorzugt ≤ 3.0 N/25mm, besonders bevorzugt ≤ 1.5 N/25mm erhalten werden.

Alternativ hierzu oder auch zusätzlich dazu kann auf die erste Haftkleberschicht eine entfernbare Abdeckschicht, beispielsweise eine haftungsmindernden Abdeckschicht, vorgesehen sein, welche nicht weiter besonders beschränkt ist, insoweit sie entfernbar ist und insbesondere haftungsmindernd ist, wobei hierbei die Definition der Haftungsminderung beispielsweise analog dem vorigen sein kann, also bei einer Messung des Schälwiderstands, gemessen analog DIN EN 1939:2003, zwischen der entfernbaren Abdeckschicht und der ersten Haftkleberschicht Werte von ≥ 5.0 N/25mm, bevorzugt ≤ 3.0 N/25mm, besonders bevorzugt ≤ 1.5 N/25mm erhalten werden.

Gemäß bestimmten Ausführungsformen umfasst die erfindungsgemäße, selbstklebende Dampfbremse weiter eine entfernbare Abdeckschicht, welche auf der ersten Haftkleberschicht auf einer der Umgebung zugewandten Seite der selbstklebenden Dampfbremse gegenüber der Trägerfolie aufgebracht ist, und/oder weist die erste Haftkleberschicht auf der auf der Trägerfolie aufgebrachten textilen Struktur und optionaler Polysiloxanschicht und/oder anderen eine Verblockung mindernden Schicht und/oder der strukturierten Oberfläche der Trägerfolie mit optionaler Polysiloxanschicht und/oder anderer eine Verblockung mindernde Schicht eine Haftung gemessen analog DIN EN 1939 von ≥ 5.0 N/25mm, bevorzugt ≤ 3.0 N/25mm, besonders bevorzugt ≤ 1.5 N/25mm auf.

Auch bzw. alternativ kann, wie oben beschrieben, eine entfernbare Abdeckschicht auf der textilen Struktur oder der strukturierten Oberfläche der Trägerfolie vorgesehen sein, die auf der oberen Oberfläche des Folienträgers, also zum Beispiel der textilen Struktur und/oder strukturierten Oberfläche, eine geringe Schälhaftung gemessen analog DIN EN 1939:2003 von ≥ 5.0 N/25mm, bevorzugt ≤ 3.0 N/25mm, besonders bevorzugt ≤ 1.5 N/25mm aufweisen kann und auf der gegenüberliegenden Seite der Abdeckschicht haftungsmindernd ausgerüstet sein kann.

Gemäß bestimmten Ausführungsformen ist auf die Trägerfolie auf einer der Umgebung zugewandten Seite der selbstklebenden Dampfbremse auf der der ersten Haftkleberschicht gegenüberliegenden Seite eine textile Struktur und optional eine Polysiloxanschicht und/oder andere eine Verblockung mindernde Schicht aufgebracht, insbesondere ist eine textile Struktur aufgebracht. Durch die textile Struktur kann eine bessere Abrollbarkeit und horizontale Stabilität der selbstklebenden Dampfbremse erzielt werden, welche bei der weiteren Verarbeitung, zum Beispiel einem Überspachteln oder Überkleben auf der textilen Struktur, vorteilhaft ist.

Bevorzugt sind Trägerfolie und textile Struktur fest miteinander verbunden. Das Material der textilen Struktur kann sich von dem der Trägerfolie unterscheiden oder diesem entsprechen.

Die textile Struktur ist nicht besonders beschränkt, ist jedoch nicht flächig geschlossen ausgebildet, sondern penetrierbar, insbesondere von pastösen und/oder dispersen Systemen, wie Spachtelmassen und/oder Klebstoffen, und kann beispielsweise ein Gewebe, ein Gelege, ein Gewirke und/oder ein Vlies sein. Als Material der textilen Struktur eignen sich beispielsweise Glas bzw. Glasfasern, Metall bzw. Metallfasern, Polyethylen (PE), Polypropylen (PP), aromatisches und/oder aliphatisches Polyamid (PA), aliphatischer und/oder aromatischer Polyester (PES), Polyacrylnitril (PAN), Polycarbonat (PC), Polyvinylchlorid (PVC), Polyolefin (PO), Polyvinylacetat (PVAC), Polyurethan (PUR), Polymethylmethacrylat (PMMA) und/oder Copolymere und/oder Mischungen und/oder Kombinationen derselben, bevorzugt Glas, PES, PC, PO, PE, PAN und/oder Copolymere und oder Mischungen und/oder eine Kombination derselben.

Auch ist das optionale Polysiloxan nicht besonders beschränkt, und es kann beispielsweise ein solches verwendet werden, wie es üblicherweise im Bereich der Klebefolienherstellung, Etikettenherstellung, Prepregs, etc., beispielsweise auf verschiedenen Folien, verwendet wird. Auch das Material einer anderen, eine Verblockung mindernden Schicht, ist nicht beschränkt, und kann beispielsweise Teflon, etc. umfassen.

Darüber hinaus ist auch die Strukturierung der Oberfläche der Trägerfolie nicht besonders beschränkt und kann beispielsweise durch ein Prägen, Abreiben, Aufrauen, Ritzen, Bearbeiten mit Laser, etc. erfolgen, wobei beispielsweise Ritze, Kanäle, Gitterstrukturen, Prägungen, etc. gebildet werden können, welche durch ihre Struktur eine bessere dreidimensionale Verbindung mit einem später aufzutragenden Material wie etwa Klebstoff und/oder Spachtelmasse ermöglichen.

Gemäß bestimmten Ausführungsformen ist die auf der Trägerfolie aufgebrachte textile Struktur und optionale Polysiloxanschicht und/oder eine andere haftungsmindernde Schicht und/oder die strukturierte Oberfläche der Trägerfolie mit optionaler Polysiloxanschicht und/oder anderer eine Verblockung mindernden Schicht, insbesondere die textile Struktur und/oder strukturierte Oberfläche der Trägerfolie, auf der der ersten Haftkleberschicht gegenüberliegenden Seite derart beschaffen, dass bei Auftrag einer Spachtelmasse, eines Dispersionsklebstoffs und/oder eines Reaktivklebstoffs ein Schälwiderstand gemessen angelehnt an EN 1372:2015 von mindestens 0,5 N/mm, bevorzugt mindestens 0,8 N/mm, weiter bevorzugt mindestens 1 N/mm erreicht wird. Hierdurch wird die Oberfläche klebefreundlich. Weiter bevorzugt ist die auf der Trägerfolie aufgebrachte textile Struktur und/oder die strukturierte Oberfläche der Trägerfolie, insbesondere die textile Struktur auf der der ersten Haftkleberschicht gegenüberliegenden Seite zumindest kurzzeitig alkalibeständig, also beispielsweise gegenüber eine alkalischen Feuchtigkeit im pH-Bereich von 8,0 bis 13,5, und/oder weist eine gewisse Steifigkeit auf.

Eine Messung angelehnt an die EN 1372:2015 kann beispielsweise wie folgt erfolgen: Zur Herstellung der Prüfkörper für die Prüfung gemäß des in der EN 1372:2015 beschriebenen Prüfverfahrens wird die erfindungsgemäße, selbstklebende Dampfbremse mit der ersten Haftkleberbeschichtung beispielsweise auf eine mindestens 50 µm dicke o-PET Folie blasenfrei auflaminiert. Auf der oberen, nicht klebenden Seite der erfindungsgemäßen, selbstklebenden Dampfbremse wird ein Rahmen zum Beispiel aus Holz, Metall oder einem anderem stabilem Material, beispielsweise im Format 240 x 70 x 15 mm aufgebracht. An einer schmalen Seite des Rahmens wird ein Kunststofffolienstreifen im Format 70 x 30 mm direkt auf die erfindungsgemäße, selbstklebende Dampfbremse aufgebracht. In den Rahmen wird eine zu prüfenden Spachtelmasse oder ein zu prüfender Klebstoff eingebracht und darauf eine Faserzementplatte, beispielsweise im Format 69 x 239 x 8 mm, eingeklebt. Nach dem Aushärten der Spachtelmasse oder des Klebstoffes wird der Rahmen entfernt. Aus der erfindungsgemäßen, selbstklebenden Dampfbremse wird mit einer geeigneten Schablone ein Streifen von beispielsweise 50,0 mm Breite und 240 mm Länge geschnitten. Die erfindungsgemäße, selbstklebende Dampfbremse wird auf Seiten des Kunststofffolienstreifens mit einem beispielsweise 50 mm breiten PET Streifen verlängert. Diese so hergestellten Prüfkörper werden analog des in der EN 1372:2015 beschriebenen Prüfverfahrens, zum Beispiel nach 7 Tagen Normklima, geprüft.

Insbesondere ist die oberste Trägerschicht, also die strukturierte Oberfläche der Trägerfolie oder die textile Struktur mit ggf. der haftungsmindernden Schicht bzw. Beschichtung, so ausgestaltet, dass einerseits kein Verblocken der Oberfläche, beispielsweise bei einem Aufrollen, stattfindet, und andererseits aufzutragende Materialien wie Spachtelmassen und/oder Klebstoffe bei der weiteren Verarbeitung eine genügend gute Verankerung finden.

Die erfindungsgemäße, selbstklebende Dampfbremse umfasst zudem mindestens eine Bremsschicht gegenüber Feuchtigkeit, beispielsweise auch eine Sperrschicht gegenüber Feuchtigkeit, und kann auch mehrere Bremsschichten und/oder Sperrschichten gegenüber Feuchtigkeit umfassen.

Gemäß bestimmten Ausführungsformen weist die Bremsschicht für Feuchtigkeit einen s_{D}-Wert, gemessen nach ASTM E 398-13, von mindestens 50 m, bevorzugt mindestens 100 m, weiter bevorzugt mindestens 200 m, auf. Eine Sperrschicht gegenüber Feuchtigkeit weist beispielsweise insbesondere einen s_{D}-Wert, gemessen nach ASTM E 398-13, von mindestens 1500 m auf.

Die mindestens eine Bremsschicht gegenüber Feuchtigkeit ist nicht besonders beschränkt, solange sie als Bremse gegenüber Feuchtigkeit wirkt, und kann beispielsweise polymer, metallisch und/oder keramisch, beispielsweise eine Metalloxidschicht, sein.

Als Metall eignet sich beispielsweise Al, Cu, Ag, Au, Ti, Cr, Ni, Pd und/oder Pt, beispielsweise Al, Ag, Au, Pd und/oder Cu, insbesondere Al und/oder Cu, welches als Folie vorgesehen sein kann und/oder beschichtet, beispielsweise aufgedampft, sein kann.

Als Metalloxide eignen sich beispielsweise Aluminiumoxid, Siliziumdioxid, Titanoxid, etc., bzw. Mischoxide; insbesondere eignen sich Aluminiumoxid, Siliziumoxid, Aluminiumsiliziumoxid.

Die mindestens eine Bremsschicht gegenüber Feuchtigkeit kann als Polymer beispielsweise ein Material umfassen bzw. aus einem Material bestehen, welches ausgewählt ist aus der Gruppe, bestehend aus Polypropylen (PP), Polyethylen (PE), Polyolefinen (PO), Latex, Nitrilkautschuk (NBR), Styrol-Butadien-Kautschuk (SBR), Polycarbonat (PC), Polyvinylchlorid (PVC), Polyvinylacetat (PVAC), Polyurethan (PU) und/oder Copolymeren und/oder Mischungen davon, weiter bevorzugt Polypropylen (PP), Polyethylen (PE), Polyolefinen (PO), Latex, Nitrilkautschuk (NBR), Styrol-Butadien-Kautschuk (SBR), Polyvinylchlorid (PVC) und/oder Copolymeren und/oder Mischungen davon.

Gemäß bestimmten Ausführungsformen ist die mindestens eine Bremsschicht gegenüber Feuchtigkeit und/oder die optionale Sperrschicht gegenüber Weichmachern eine Polymerschicht aus Polymermaterial. Wie ausgeführt kann in bestimmten Ausführungsformen die Bremsschicht gegenüber Feuchtigkeit und/oder gegenüber Weichmacher in die Trägerfolie integriert sein.

So die Bremsschicht gegenüber Feuchtigkeit als Polymerschicht vorgesehen ist, weist diese gemäß bestimmten Ausführungsformen eine Dicke im Bereich von 10 µm bis zu 1000 µm auf, bevorzugt im Bereich von 20 µm bis zu 500 µm, weiter bevorzugter im Bereich von 50 µm bis zu 300 µm. Dies ergibt im Fall der Verwendung einer Polymerschicht als Bremsschicht gegenüber Feuchtigkeit eine besondere Stabilität sowohl in mechanischer Hinsicht als auch in Hinsicht auf Bremswirkung gegenüber Feuchtigkeit. Bei Metallen oder Metalloxiden liegt die Dicke der Bremsschicht gegenüber Feuchtigkeit gemäß bestimmten Ausführungsformen in einem Dickenbereich von 10 nm bis ca. 100 µm.

So die Sperrschicht gegenüber Weichmacher als Polymerschicht vorgesehen ist, weist diese gemäß bestimmten Ausführungsformen eine Dicke im Bereich von 1 µm bis zu 200 µm auf, bevorzugt im Bereich von 10 µm bis zu 150 µm, weiter bevorzugter im Bereich von 15 bis 100 µm, noch weiter bevorzugt 20 bis 60 µm, auf. So die Sperrschicht gegenüber Weichmacher als Metall- oder Metalloxidschicht vorgesehen ist, weist diese gemäß bestimmten Ausführungsformen eine Dicke von 15 nm bis 50 µm, bevorzugt 20 nm - 30 µm auf.

Es ist auch denkbar, dass die Trägerfolie allein aus einer metallischen Dampfbremse und ggf. Weichmachersperre besteht, welche gemäß bestimmten Ausführungsformen eine Dicke von 10 bis 500 µm, bevorzugt 20 bis 200 µm, weiter bevorzugt 30 bis 100 µm aufweist.

Gemäß bestimmten Ausführungsformen weist die erfindungsgemäße, selbstklebende Dampfbremse eine dampfbremsende Wirkung bzw. Bremswirkung gegenüber Feuchtigkeit mit einem s_{D}-Wert, gemessen nach ASTM E 398-13, von mindestens 50 m, bevorzugt mindestens 100 m, weiter bevorzugt mindestens 200 m, noch weiter bevorzugt mindestens 500 m, insbesondere bevorzugt mindestens 1500 m, auf.

Die erfindungsgemäße, selbstklebende Dampfbremse kann in verschiedenen Ausführungsformen hergestellt werden, beispielsweise in Rollenform, als Bahn oder als Platte, welche dann geeignet im erfindungsgemäßen Verfahren verwendet werden können. Gemäß bestimmten Ausführungsformen wir die erfindungsgemäße, selbstklebende Dampfbremse in Rollenform hergestellt.

Gemäß bestimmten Ausführungsformen befindet sich die mindestens eine Bremsschicht für Feuchtigkeit zwischen der mindestens einen Trägerfolie und der ersten Haftkleberschicht und/oder ist mit der ersten Haftkleberschicht in Kontakt. Dies ist insbesondere vorteilhaft, wenn die Trägerfolie feuchtigkeitsempfindlich ist. Es ergibt sich beispielsweise die Abfolge erste Haftkleberschicht / Bremsschicht gegenüber Feuchtigkeit / Trägerfolie / strukturierte Oberfläche und/oder textile Struktur, ggf. mit haftungsminderndem Material behandelt. Es kann hierbei eine Sperrschicht gegenüber Weichmacher beispielsweise zwischen der strukturierten Oberfläche und der Trägerfolie, in der Trägerfolie integriert, zwischen der Bremsschicht gegenüber Feuchtigkeit und der Trägerfolie, und/oder der ersten Haftkleberschicht und der Bremsschicht gegenüber Feuchtigkeit vorgesehen sein, wobei hierbei auf die Beständigkeit der Materialien der jeweiligen Schicht gegenüber Weichmacher entsprechend Rücksicht genommen werden kann. Auch können mehrere Bremsschichten gegenüber Feuchtigkeit und/oder Trägerfolien und/oder Sperrschichten gegenüber Weichmacher vorgesehen sein. Weiterhin ist auch denkbar, dass die Bremsschicht gegenüber Feuchtigkeit gleichzeitig als Sperrschicht gegenüber Weichmacher wirkt oder dass die Trägerfolie als Bremsschicht gegenüber Feuchtigkeit und/oder Sperrschicht gegenüber Weichmacher wirkt.

Gemäß bestimmten Ausführungsformen kann sich die Bremsschicht gegenüber Feuchtigkeit auch auf oder integriert in der Trägerfolie befinden, auf einer der ersten Haftkleberschicht abgewandten Seite, beispielsweise wenn die Trägerfolie nicht feuchtigkeitsempfindlich ist. Es ergibt sich beispielsweise die Abfolge erste Haftkleberschicht / Trägerfolie / Bremsschicht gegenüber Feuchtigkeit / textile Struktur, ggf. mit haftungsminderndem Material behandelt; oder erste Haftkleberschicht / Trägerfolie mit integrierter Bremsschicht gegenüber Feuchtigkeit / strukturierte Oberfläche und/oder textile Struktur, ggf. mit haftungsminderndem Material behandelt. Es kann hierbei eine Sperrschicht gegenüber Weichmacher beispielsweise zwischen der strukturierten Oberfläche und der Bremsschicht gegenüber Feuchtigkeit, in der Trägerfolie integriert, zwischen der Bremsschicht gegenüber Feuchtigkeit und der Trägerfolie und/oder der ersten Haftkleberschicht und der Trägerfolie vorgesehen sein, wobei hierbei ebenfalls auf die Beständigkeit der Materialien der jeweiligen Schicht gegenüber Weichmacher entsprechend Rücksicht genommen werden kann. Auch können wiederum mehrere Bremsschichten gegenüber Feuchtigkeit und/oder Trägerfolien und/oder Sperrschichten gegenüber Weichmacher vorgesehen sein. Weiterhin ist wiederum denkbar, dass die Bremsschicht gegenüber Feuchtigkeit gleichzeitig als Sperrschicht gegenüber Weichmacher wirkt oder dass die Trägerfolie als Bremsschicht gegenüber Feuchtigkeit und/oder Sperrschicht gegenüber Weichmacher wirkt.

Zudem betrifft die vorliegende Erfindung die Verwendung der erfindungsgemäßen, selbstklebenden Dampfbremse zum Verlegen auf einem restfeuchten Untergrund. Hierbei kann die Dampfbremse derart beschaffen sein, wie sie im Zusammenhang mit dem ersten Aspekt der Erfindung beschrieben ist, und umfasst somit auch sämtliche dort dargelegten Ausführungsformen. Zudem kann die erfindungsgemäße, selbstklebende Dampfbremse zum Absperren eines restfeuchten Untergrunds verwendet werden.

Gemäß bestimmten Ausführungsformen ist der restfeuchte Untergrund bei der erfindungsgemäßen Verwendung wie auch im erfindungsgemäßen Verfahren ein restfeuchter Untergrund zum Beispiel auf mineralischer, bevorzugt zementärer, Basis, welcher eine Restfeuchte aufweist, welche über den in SIA 253:2002 (SIA Zurich), S. 12, Punkt 5.1.5 angegebenen Werten liegt.

Je nach zu verlegendem Bodenbelag, gelten Grenzwerte für die Untergrundfeuchtigkeit die unterschritten werden müssen, um die sogenannte Verlegereife zu erreichen. Nach geltenden Regeln des Faches, zum Beispiel gemäß TKB Merkblatt 8, sind für die Belegereife CM Werte ≤ 2.0 CM-% in Zementestrichen einzuhalten für unbeheizte Flächen und ≤ 1.8 CM-% für beheizte Flächen.

Untergründe, zum Beispiel mineralische Untergründe, insbesondere zementäre Untergründe, welche höhere Feuchtigkeitswerte aufweisen gelten im diesem Sinne als "feucht" bzw. "restfeucht".

Zum Beispiel müssen Zementestriche für die Verlegung von elastischen Bodenbelägen nach geltenden Regeln des Faches, bzw. nach allgemeiner Interpretation der DIN 18365:2006, maximal eine Feuchte von 2.0 CM-% aufweisen.

Gemäß bestimmten Ausführungsformen ist der restfeuchte Untergrund ein restfeuchter Untergrund auf mineralischer Basis mit einer Restfeuchte von mehr als 1,8 CM-%, bevorzugt mehr als 2,0 CM-%, weiter bevorzugt mehr als 2,5 CM-%, noch weiter bevorzugt mehr als 3,0 CM-%, insbesondere bevorzugt gleich oder mehr als 4,0 CM-%, gemessen gemäß SIA 253:2002, Calciumcarbid Methode (CM), S. 16 -17. Bezüglich der Messung kann auch auf die Technische Kommission Boden (TKB) des Industrieverbands Kleben, TKB Merkblatt 8, TKB Merkblatt 16 sowie BEB (Bundesverband Estrich & Belag) Technische Information 1/1998 verwiesen werden. Ein Untergrund auf mineralischer Basis ist hierbei beispielsweise ein Zementestrich und/oder eine Betonplatte, etc. Gemäß bestimmten Ausführungsformen ist der Untergrund beispielsweise nicht basierend auf Linoleum, einem polymeren Material, Metall, Gips und/oder Holz, beispielsweise Parkett, insbesondere nicht basierend auf Linoleum, einem polymeren Material, Metall und/oder Holz.

Gemäß bestimmten Ausführungsformen ist der restfeuchte Untergrund ein restfeuchter Untergrund auf mineralischer Basis mit einer Restfeuchte von maximal 6.0 CM-%, beispielsweise maximal 5.0 CM-%. Es können durchaus auch höher feuchte Zementestriche abgesperrt werden, sofern sie vollständig abgebunden und mechanisch belastbar sind.

In einem weiteren Aspekt betrifft die vorliegende Erfindung ein Verfahren zum Aufbringen einer Bremsschicht für Feuchtigkeit auf einem restfeuchten Untergrund, umfassend:
- Aufbringen der erfindungsgemäßen, oben beschriebenen, selbstklebenden Dampfbremse auf den restfeuchten Untergrund, wobei die erste Haftkleberschicht auf dem restfeuchten Untergrund aufgebracht wird, wobei ggf. die entfernbare Abdeckschicht oder die entfernbaren Abdeckschichten vor, während oder nach dem Aufbringen der selbstklebenden Dampfbremse entfernt wird bzw. entfernt werden. Insbesondere wird eine entfernbare Abdeckschicht auf der ersten Haftkleberschicht, so vorhanden, vor oder während dem Aufbringen entfernt, wohingegen die entfernbare Abdeckschicht auf der textilen Struktur und/oder strukturierten Oberfläche, ggf. mit haftungsmindernder Schicht, bevorzugt erst nach dem Aufbringen und unmittelbar vor einer weiteren Bearbeitung entfernt wird. Hierzu kann die Abdeckschicht auf der textilen Struktur und/oder strukturierten Oberfläche, ggf. mit haftungsmindernder Schicht, beispielsweise eine schwach klebende Schicht aufweisen und kann auf der gegenüberliegenden Seite leichttrennend ausgerüstet sein.

Das Aufbringen entspricht hierbei einem Verlegen, wobei bevorzugt eine Bindung oder Haftung zwischen restfeuchtem Untergrund und erster Haftkleberschicht der selbstklebenden Dampfbremse erfolgt, was zu einer Befestigung der selbstklebenden Dampfbremse auf dem Untergrund führt.

Die erfindungsgemäße, selbstklebende Dampfbremse kann auch im erfindungsgemäßen Verfahren in allen in Verbindung mit dem ersten Aspekt genannten Ausführungsformen in jeglichen möglichen Kombinationen verwendet werden, wobei sich bevorzugte Ausführungsformen im Verfahren - wie auch in der erfindungsgemäßen Verwendung - aus bevorzugten Ausführungsformen der selbstklebenden Dampfbremse ergeben.

Die Definition des restfeuchten Untergrunds entspricht der Definition im Zusammenhang mit der erfindungsgemäßen Verwendung.

Gemäß bestimmten Ausführungsformen ist der restfeuchte Untergrund ein restfeuchter Untergrund auf mineralischer Basis, zum Beispiel zementärer Untergrund, mit einer Restfeuchte von mehr als 1,8 CM-%, bevorzugt mehr als 2,0 CM-%, weiter bevorzugt mehr als 2,5 CM-%, noch weiter bevorzugt mehr als 3,0 CM-%, insbesondere bevorzugt gleich oder mehr als 4,0 CM-%, gemessen gemäß SIA 253:2002.

Gemäß bestimmten Ausführungsformen werden mehrere erfindungsgemäße, selbstklebende Dampfbremsen überlappend aufgebracht. Hierdurch kann ein Feuchtigkeitsdurchtritt an den Überlappungsstellen bzw. Verbindungsstellen vermindert bzw. verhindert werden. Um Unebenheiten zu minimieren kann der Überlapp hierbei möglichst gering ausfallen und/oder möglichst dünn sein.

Gemäß bestimmten Ausführungsformen werden mehrere erfindungsgemäße, selbstklebende Dampfbremsen aneinander angrenzend aufgebracht und an den angrenzenden Stellen mit mindestens einem einseitig oder zweiseitig, beispielsweise einseitig, selbstklebenden Band verbunden und/oder es wird auf dem restfeuchten Untergrund unterhalb der angrenzenden Stellen der erfindungsgemäßen, selbstklebenden Dampfbremsen mindestens ein einseitig und/oder zweiseitig, beispielsweise einseitig, selbstklebendes Band aufgebracht und die erfindungsgemäßen, selbstklebenden Dampfbremsen auf das mindestens eine einseitig und/oder zweiseitig selbstklebende Band aufgebracht, sodass sich die aneinander angrenzenden Stellen der erfindungsgemäßen, selbstklebenden Dampfbremsen über dem einseitig oder zweiseitig selbstklebenden Band befinden, wobei das mindestens eine einseitig und/oder zweiseitig selbstklebende Band mindestens eine Bremsschicht für Feuchtigkeit aufweist. Auch in solchen Ausführungsformen ist es bevorzugt, dass die Fläche und/oder Dicke des selbstklebenden Bands möglichst gering ist, um Unebenheiten zu minimieren.

Ein aneinander angrenzendes Aufbringen ist hierbei beispielsweise ein Anbringen auf Stoß unter Vermeidung von Überlappungen, wobei sich hierbei Fugen bilden können, durch welche Restfeuchte des Untergrunds dringen kann. Um dies zu verhindern werden die einseitig oder zweiseitig selbstklebenden Bänder verwendet. Die einseitig oder zweiseitig selbstklebenden Bänder weisen bevorzugt eine Haftkleberschicht auf, welche auf den restfeuchten Untergrund und/oder die erfindungsgemäße, selbstklebende Dampfbremse aufgebracht wird, wobei diese Haftkleberschicht hinsichtlich ihres Materials bevorzugt der ersten Haftkleberschicht der erfindungsgemäßen, selbstklebenden Dampfbremse entspricht.

So ein einseitig selbstklebendes Band auf den restfeuchten Untergrund aufgebracht wird und darüber die erfindungsgemäße, selbstklebende Dampfbremse, weist das einseitig selbstklebende Band bevorzugt als Haftkleberschicht eine solche auf, welche der ersten Haftkleberschicht der erfindungsgemäßen, selbstklebenden Dampfbremse entspricht, wobei diese Haftkleberschicht bevorzugt auf den restfeuchten Untergrund aufgebracht wird.

Bevorzugt umfassen die einseitig und/oder zweiseitig selbstklebenden Bänder auch mindestens eine Bremsschicht gegenüber Feuchtigkeit, welche denen der erfindungsgemäßen, selbstklebenden Dampfbremse entspricht. Sie können darüber hinaus auch mindestens eine Sperrschicht gegenüber Weichmachern enthalten.

Gemäß bestimmten Ausführungsformen wird bei einem Anbringen bzw. Verlegen auf Stoß auf einer erfindungsgemäßen, selbstklebenden Dampfbremse, umfassend eine textile Struktur, diese textile Struktur in angrenzenden Zonen ausgespart, und das mindestens eine einseitig und/oder zweiseitig selbstklebende Band auf dieser durch die angrenzenden Zonen gebildeten Zwischenzone aufgebracht.

Gemäß bestimmten Ausführungsformen wird zur Materialersparnis das mindestens eine einseitig und/oder zweiseitig selbstklebende Band nur unterhalb der angrenzenden Stellen oder nur oberhalb der erfindungsgemäßen, selbstklebenden Dampfbremsen aufgebracht, wobei es natürlich beim Aufbringen von mehr als zwei erfindungsgemäßen, selbstklebenden Dampfbremsen auch möglich ist, dass das selbstklebende Band bei einer oder mehr aneinander angrenzenden Stellen unterhalb der erfindungsgemäßen, selbstklebenden Dampfbremsen angebracht wird und an einer oder mehr anderen aneinander angrenzenden Stellen zur Verbindung der erfindungsgemäßen, selbstklebenden Dampfbremsen auf diesen bzw. oberhalb von diesen angebracht wird.

Es ist erfindungsgemäß nicht ausgeschlossen, dass sowohl einseitig als auch zweiseitig selbstklebende Bänder verwendet werden, zum Beispiel oberhalb und/oder unterhalb der erfindungsgemäßen, selbstklebenden Dampfbremsen, als auch zudem noch ein Überlapp der erfindungsgemäßen, selbstklebenden Dampfbremsen stattfindet, wobei dies jedoch im Hinblick auf die Vermeidung von größeren Unebenheiten und einem Mehrverbrauch an Material jedoch nicht unbedingt bevorzugt ist. Bei Verlegen der erfindungsgemäßen, selbstklebenden Dampfbremse auf Teilflächen bzw. Patches ist es ggf. auch möglich, auf einseitig oder zweiseitig selbstklebende Bänder zu verzichten. Insbesondere werden einseitig oder zweiseitig selbstklebende Bänder bei einer Restfeuchte des Untergrunds von 2,5 CM-% oder mehr, bevorzugt 3,0 CM-% oder mehr, verwendet und/oder die erfindungsgemäßen, selbstklebende Dampfbremsen überlappend aufgebracht.

Gemäß bestimmten Ausführungsformen weist die mindestens eine Bremsschicht für Feuchtigkeit des mindestens einen einseitig und/oder zweiseitig selbstklebenden Bands einen s_{D}-Wert, gemessen analog ASTM E 398-13, von mindestens 50 m, bevorzugt mindestens 100 m, weiter bevorzugt mindestens 200 m auf.

Gemäß bestimmten Ausführungsformen ergibt sich an mit Bändern abgedichteten, aneinander angrenzenden Stellen, beispielsweise Fugen, von zwei oder mehr erfindungsgemäßen, selbstklebenden Dampfbremsen jeweils ein s_{D}-Wert, gemessen analog ASTM E 398-13, von mindestens 20 m, bevorzugt mindestens 50 m, weiter bevorzugt mindestens 100 m.

Gemäß bestimmten Ausführungsformen wird im erfindungsgemäßen Verfahren auf die auf der Trägerfolie aufgebrachte textile Struktur und optionale Polysiloxanschicht und/oder andere eine Verblockung mindernde Schicht und/oder die strukturierte Oberfläche der Trägerfolie mit optionaler Polysiloxanschicht und/oder anderer eine Verblockung mindernden Schicht eine Spachtelmasse, ein Dispersionsklebstoff und/oder ein Reaktivklebstoff aufgebracht. Die Spachtelmasse, der Dispersionsklebstoff und der Reaktivklebstoff sind hierbei nicht besonders beschränkt und können geeignet anhand eines darauf zu verlegenden Bodens bestimmt werden. Alternativ kann, beispielsweise bei ausreichender Ebenheit der selbstklebenden Dampfbremse, bzw. des Untergrundes, auch direkt ein entsprechender Boden auf die selbstklebende Dampfbremse aufgebracht werden.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss anhand einiger beispielhafter Ausführungsformen dargestellt, die diese jedoch nicht einschränken.

### Vorversuche

Es wurden verschiedene Prüfkörper mit identischer Trägerfolie und verschiedenen ersten Haftkleberschichten bzw. Klebstoffen mit einer Klebstoffauftragsmasse von 10 - 200 g/m² hergestellt.

Als Klebstoffe wurden ein dispersionsbasiertes Acrylat 1, ein acrylischer Hotmelt als Acrylat 2, ein weiterer acrylischer Hotmelt als Acrylat 3, ein SBS-Klebstoff als SBS 1, ein SBS Hotmelt als SBS 2 und ein weiterer SBS Hotmelt als SBS 3 verwendet.

Die Prüfkörper wurden auf eine feuchtigkeitsgesättigte Faserzementplatte aufgebracht und nach dem in DIN EN 1939:2003 beschriebenen Verfahren mit dieser verbunden. Nach 15 Minuten erfolgte eine Messung des Schälwiderstands nach dem in DIN EN 1939:2003 beschriebenen Verfahren.

Hiermit kann ein restfeuchter Untergrund simuliert werden, welcher beim tatsächlichen Verlegen der erfindungsgemäßen, selbstklebenden Dampfbremse mit dieser in Kontakt kommt und in Verbindung tritt. Auf Datenblättern werden zumeist Klebkräfte auf Normuntergründen wie zum Beispiel Stahl (V2A) oder Glas angegeben. Es hat sich gezeigt, dass die auf den Datenblättern angegebenen Messwerte lediglich als Ausgangspunkt für eine grobe Klebstoffselektion dienen können und diese dann spezifisch geprüft werden müssen. Als Faserzementplatte wurde hierbei eine handelsübliche, unbehandelte Faserzementplatte verwendet.

Zum Vergleich erfolgte zudem eine Messung des Schälwiderstands nach dem in DIN EN 1939:2003 beschriebenen Verfahren nach Aufbringen der Prüfkörper auf Stahl und Glas sowie eine trockene Faserzementplatte und Verbinden mit diesen, ebenfalls nach 15 Minuten. Die Schälprüfung erfolgte bei Normklima.

Zudem wurden so aufgetragene und verbundene Prüfkörper auf den feuchtigkeitsgesättigten Faserzementplatten für 28 Tage bei 50°C unter Erhalt der Feuchtigkeit gealtert und im Anschluss wiederum der Schälwiderstand nach dem in DIN EN 1939:2003 beschriebenen Verfahren gemessen.

Mit einem pH-Streifen wurde zudem der pH der feuchtigkeitsgesättigten Faserzementplatte gemäß ASTM F710-11, Absatz 5.2 gemessen, und es ergab sich ein pH von ca. 13,0.

Während auf den trockenen Untergründen Stahl und Glas sowie Faserzement oftmals ein ähnliches Verhalten der Klebstoffe beobachtet wird, so wird auf feuchten Untergründen überaschenderweise oft ein ganz anderes Verhalten festgestellt. Die Messwerte der Schälprüfungen analog DIN EN 1939:2003 nach 15 Minuten sind in Tabelle 1 gezeigt.

**Tabelle 1: Messwerte des Schälwiderstands nach 15 Minuten**

| | Klebstoff | DIN Stahl [N/25mm] | Glas [N/25mm] | Faser Zement trocken [N/25mm] | Faserzement feucht [N/25mm] |
|---|---|---|---|---|---|
| 1 | Acrylat 1 | 6.9 | 9.3 | 9.1 | 0.07 |
| 2 | Acrylat 2 | 11.1 | 15.7 | 21.9 | 0.27 |
| 3 | Acrylat 3 | 41.6 | 62.2 | 39.5 | 4.00 |
| 4 | SBS 1 | 43.5 | 44.7 | 13.9 | 0.15 |
| 5 | SBS 2 | 35.6 | 42.4 | 31.9 | 7.97 |
| 6 | SBS 3 | 17.8 | 19.6 | 18.0 | 7.89 |

Für unterschiedliche, trockene Untergründe können für einen Klebstoff allenfalls Analogieschlüsse für die Klebeeigenschaften von Untergrund zu Untergrund gezogen werden. Die Schälkraftmessungen auf normierten Untergründen lassen jedoch keine Schlüsse auf das Verhalten der Klebstoffe auf restfeuchten Untergründen zu, wie aus Tabelle 1 ersichtlich.

In Tabelle 2 sind die Ergebnisse der Schälprüfungen für die Prüfkörper auf feuchtigkeitsgesättigten Faserzementplatten nach 15 Minuten Einwirkdauer und nach 28 Tagen Feuchtlagerung bei 50°C aufgeführt, wobei sich analoge Werte auch nach 41 Tagen ergaben. Beständige Haftklebstoffschichten weisen hierbei bevorzugt keinen Abfall der Klebekräfte auf.

**Tabelle 2**

| | Klebstoff | Faserzement Feucht 15' [N/25mm] | Faserzement Feucht 28 Tage 50°C [N/25mm] |
|---|---|---|---|
| 1 | Acrylat 1 | 0.07 | 2.3 |
| 2 | Acrylat 2 | 0.27 | 9.0 |
| 3 | Acrylat 3 | 4.00 | 0.67 |
| 4 | SBS 1 | 0.15 | 7.2 |
| 5 | SBS 2 | 7.97 | 17.2 |
| 6 | SBS 3 | 7.89 | 0.86 |

| | | | |
|---|---|---|---|
| 15' = 15 Minuten | | | |

Welche Klebstoffe für eine Projekt funktionieren und welche nicht, muss jeweils anhand der Projektanforderungen beurteilt werden. Als Mindestanforderungen sollen Schälkräfte angelehnt an die DIN EN 1939:2003 von mindestens 3.0 N/25mm in allen relevanten Bedingungen erreicht werden. Dies umfasst beispielsweise Schälkräfte sowohl auf trockener als auch feuchter Faserzementplatte, als auch auf feuchter Faserzementplatte nach beschleunigter Alterung, zumindest nach 20 Tagen, bevorzugt 28 Tagen, weiter bevorzugt 41 Tagen bei 50°C. Zudem sollte bevorzugt nach beschleunigter Alterung kein Schälkraftabfall gegenüber 15 Minuten auftreten.

Gemäß diesen Anforderungen und aus den hier aufgestellten Messdaten ist erkennbar, dass Acrylat 1 sowohl auf feuchter Faserzementplatte sowohl nach 15 Minuten als auch nach beschleunigter Alterung keine ausreichende Haftung zustande bringt. Acrylat 2 und SBS 1 haben eine zu geringe Anfangshaftung auf der feuchten Faserzementplatte und scheitern trotz guten Werten nach beschleunigter Alterung. Acrylat 3 und SBS 3 weisen ausreichende Kurzzeithaftungswerte auf der feuchten Faserzementplatte auf, sind jedoch zu wenig beständig in feucht, alkalischem Milieu. Ausreichende Eigenschaften weist in dieser Auswahl SBS 2 auf, mit ausreichenden Haftungswerten auf feuchter Faserzementplatte sowohl nach 15 Minuten als auch nach beschleunigter Alterung nach 20 Tagen, bevorzugt 28 Tagen, weiter bevorzugt 41 Tagen bei 50°C in alkalisch feuchtem Milieu sowie auf trockenen Untergründen.

### Beispiel 1

Mit SBS 2 als erste Haftkleberschicht kann nunmehr eine erfindungsgemäße, selbstklebende Dampfbremse hergestellt werden, welche auf einer Oberseite eines Folienträgers aus Polyethylen, welcher mit einer zum Beispiel 50 nm dicken Aluminiumschicht bedampft ist, mit einem Vlies auf Glasfaserbasis verbunden ist, und auf der anderen Seite des Folienträgers mit der ersten Haftkleberschicht versehen ist.

Es ergibt sich eine einseitige selbstklebende Dampfbremse mit Dampfbremse, welche auf oberflächlich trockene, restfeuchte, zementäre Untergründe geklebt und direkt überspachtelt oder überklebt werden kann. Der Träger enthält sowohl eine Feuchtigkeits- als auch eine Weichmachersperre und der Klebstoff der offenen Seite, also die erste Haftkleberschicht, ist für die Verklebung auf dem restfeuchten Untergrund ausgelegt.

Die selbstklebende Dampfbremse kann zu einer Rolle gewickelt werden. Die Wicklung erfolgt bevorzugt so, dass die selbstklebende, offene Seite auf der Rolle innen liegt und nach dem Ausrollen mit dem Untergrund verbunden wird und die zu überspachtelnde Seite oben liegt.

Im System kann zudem ein zugehöriges Abdeckband mit verwendet werden, welches für eine flächige Abdichtung dienen kann, wobei anstelle dessen auch mit einer Überlappung gearbeitet werden kann.

Die erfindungsgemäße, einseitig selbstklebende Dampfbremse kann beispielsweise auf neue, feuchtebeständige Untergründe, zum Beispiel Zementestriche und/oder flügelglatten Beton im Innenbereich, aufgebracht werden und mit Spachtelmassen der Uzin Utz AG, beispielsweise zementären Spachtelmassen und/oder Calciumsulfatspachtelmassen, überspachtelt werden und/oder direkt ein Bodenbelag mit konventionellen Klebstoffen, zum Beispiel 1K-PU-Klebstoffe, 2K-PU Klebstoffe, 2K-Epoxy Klebstoffe, MS-Klebstoffe und/oder Dispersionsklebstoffe, aufgeklebt werden.

Wenn eine Dampfsperre benötigt wird, so wird bevorzugt mit Überlappungen und/oder mit einem Abdeckband gearbeitet, damit dichte Flächen entstehen.

Die erfindungsgemäße, selbstklebende Dampfbremse kann beispielsweise auf rohe, zementäre, restfeuchte, wasserfeste, oberflächlich trockene, tragfähige, staub-, schmutz- und fettfreie Untergründe, zum Beispiel Zementestrich, flügelglatter Beton, Beton, etc. aufgebracht werden.

Das Austrocknen von Betonböden, Verbundestrichen oder schwimmenden Estrichen im Hochbau benötigt viel Zeit. Ein Estrich benötigt oft mehrere Wochen Trockenzeit bis dieser verlegereif ist, um eine Spachtelmasse aufnehmen zu können, auf welche in der Folge ein elastischer Bodenbelag geklebt werden kann. Betonböden brauchen oft mehrere Monate Trockenzeit. Aufgrund des hohen Zeitdrucks wird oft mit Dampfbremsen gearbeitet.

Die heute praktizierten Verfahren sind zeit- und arbeitsaufwändig und die verwendeten Materialien sind oftmals aus Sicht des Arbeitsschutzes bedenklich. Oftmals sind für einen geeigneten Aufbau mehrere Tage für die Arbeiten notwendig.

Mit den erfindungsgemäßen, selbstklebenden Dampfbremsen kann ein restfeuchter Untergrund, bevorzugt auf zementärer Basis, schnell abgedichtet werden und für die weitere Bearbeitung bereitgestellt werden. Die erfindungsgemäßen, selbstklebenden Dampfbremsen sind für nicht plane, evtl. raue Untergründe geeignet und können direkt mit Spachtelmassen überspachtelt oder mit einem Bodenbelag mit einem oder mehreren konventionellen Klebstoffen überklebt werden.

## Patentansprüche

1. Selbstklebende Dampfbremse, umfassend:
- mindestens eine Trägerfolie;
- mindestens eine Bremsschicht für Feuchtigkeit; und
- eine erste Haftkleberschicht, welche gegenüber Feuchtigkeit beständig ist und sich auf einer der Umgebung zugewandten Seite der selbstklebenden Dampfbremse befindet, wobei auf die Trägerfolie auf einer der Umgebung zugewandten Seite der selbstklebenden Dampfbremse auf der der ersten Haftkleberschicht gegenüberliegenden Seite eine textile Struktur und optional eine Polysiloxanschicht und/oder andere eine Verblockung mindernde Schicht und/oder eine entfernbare Abdeckschicht aufgebracht ist und/oder die Trägerfolie auf der der ersten Haftkleberschicht gegenüberliegenden Seite strukturiert ist und optional eine Polysiloxanschicht und/oder andere eine Verblockung mindernde Schicht und/oder eine entfernbare Abdeckschicht aufweist,
wobei die erste Haftkleberschicht nach Auftragung auf eine feuchtigkeitsgesättigte Faserzementplatte einen Schälwiderstand gemessen analog DIN EN 1939:2003 von
≥ 3.0 N/25 mm aufweist, und
wobei die erste Haftkleberschicht nach beschleunigter Alterung auf einer feuchtigkeitsgesättigten Faserzementplatte für 20 Tage bei 50°C unter Erhalt der Feuchtigkeit einen Schälwiderstand gemessen analog DIN EN 1939:2003 von ≥ 3.0 N/25 mm aufweist.

2. Selbstklebende Dampfbremse nach Anspruch 1, wobei die Bremsschicht für Feuchtigkeit einen s_{D}-Wert, gemessen nach ASTM E 398-13, von mindestens 50 m aufweist.

3. Selbstklebende Dampfbremse nach Anspruch 1 oder 2, weiter umfassend mindestens eine Sperrschicht, welche für Weichmacher undurchlässig ist.

4. Selbstklebende Dampfbremse nach einem der vorgehenden Ansprüche, wobei die mindestens eine Bremsschicht für Feuchtigkeit und/oder die optionale mindestens eine Sperrschicht, welche für Weichmacher undurchlässig ist, in die Trägerfolie integriert ist.

5. Selbstklebende Dampfbremse nach einem der vorgehenden Ansprüche, wobei die erste Haftkleberschicht gegenüber alkalischer Feuchtigkeit bei einem pH von gleich oder mehr als 8,0 und gleich oder weniger als 13,5 beständig ist.

6. Selbstklebende Dampfbremse nach einem der vorgehenden Ansprüche, wobei die mindestens eine Bremsschicht für Feuchtigkeit sich zwischen der mindestens einen Trägerfolie und der textilen Struktur befindet und/oder mit der textilen Struktur in Kontakt ist.

7. Selbstklebende Dampfbremse nach einem der vorgehenden Ansprüche, wobei die erste Haftkleberschicht eine Klebstoffauftragsmasse von 10 - 200 g/m² aufweist.

8. Selbstklebende Dampfbremse nach einem der vorgehenden Ansprüche, wobei die Trägerfolie bei einer Messung der Druckfestigkeit gemäß DIN EN ISO 24343-1 einen Eindruck nach statischer Belastung von ≥ 0.1 mm sowie einen Resteindruck nach statischer Belastung von ≥ 0.1 mm aufweist.

9. Selbstklebende Dampfbremse nach einem der vorgehenden Ansprüche, weiter umfassend eine entfernbare Abdeckschicht, welche auf der ersten Haftkleberschicht auf einer der Umgebung zugewandten Seite der selbstklebenden Dampfbremse gegenüber der Trägerfolie aufgebracht ist, und/oder wobei die erste Haftkleberschicht auf der auf der Trägerfolie aufgebrachten textilen Struktur und optionalen Polysiloxanschicht und/oder anderen eine Verblockung mindernden Schicht und/oder der strukturierten Oberfläche der Trägerfolie mit optionaler Polysiloxanschicht und/oder anderen eine Verblockung mindernden Schicht eine Haftung gemessen analog DIN EN 1939 von ≥ 5.0 N/25mm aufweist.

10. Selbstklebende Dampfbremse nach einem der vorgehenden Ansprüche, wobei die auf der Trägerfolie aufgebrachten textile Struktur und optionale Polysiloxanschicht und/oder andere eine Verblockung mindernde Schicht und/oder die strukturierte Oberfläche der Trägerfolie mit optionaler Polysiloxanschicht und/oder anderer eine Verblockung mindernden Schicht derart beschaffen ist, dass bei Auftrag einer Spachtelmasse, eines Dispersionsklebstoffs und/oder eines Reaktivklebstoffs ein Schälwiderstand gemessen analog EN 1372 von mindestens 1 N/mm erreicht wird.

11. Verwendung einer selbstklebenden Dampfbremse nach einem der Ansprüche 1 bis 10 zum Verlegen auf einem restfeuchten Untergrund.

12. Verwendung nach Anspruch 11, wobei der restfeuchte Untergrund ein restfeuchter Untergrund auf mineralischer Basis mit einer Restfeuchte von mehr als 1,8 CM-%, gemessen gemäß SIA 253:2002, ist.

13. Verfahren zum Aufbringen einer Bremsschicht für Feuchtigkeit auf einem restfeuchten Untergrund, umfassend:
- Aufbringen einer selbstklebenden Dampfbremse nach einem der Ansprüche 1 bis 10 auf den restfeuchten Untergrund, wobei die erste Haftkleberschicht auf dem restfeuchten Untergrund aufgebracht wird, wobei ggf. die entfernbare Abdeckschicht oder die entfernbaren Abdeckschichten vor, während und/oder nach dem Aufbringen der selbstklebenden Dampfbremse entfernt wird bzw. entfernt werden.

14. Verfahren nach Anspruch 13, wobei mehrere selbstklebende Dampfbremsen nach einem der Ansprüche 1 bis 10 überlappend aufgebracht werden.

15. Verfahren nach Anspruch 13, wobei mehrere selbstklebende Dampfbremsen nach einem der Ansprüche 1 bis 10 aneinander angrenzend aufgebracht werden und an den angrenzenden Stellen mit mindestens einem einseitig und/oder zweiseitig selbstklebenden Band verbunden werden und/oder auf dem restfeuchten Untergrund unterhalb der angrenzenden Stellen der selbstklebenden Dampfbremsen nach einem der Ansprüche 1 bis 10 mindestens ein einseitig und/oder zweiseitig selbstklebendes Band aufgebracht wird und die selbstklebende Dampfbremsen nach einem der Ansprüche 1 bis 10 auf das mindestens eine einseitig und/oder zweiseitig selbstklebende Band aufgebracht werden, wobei das mindestens eine einseitig und/oder zweiseitig selbstklebende Band mindestens eine Bremsschicht für Feuchtigkeit aufweist.

16. Verfahren nach Anspruch 15, wobei die Bremsschicht für Feuchtigkeit des mindestens einen einseitig und/oder zweiseitig selbstklebenden Bands einen s_{D}-Wert, gemessen analog ASTM E 398-13, von mindestens 50 m aufweist.

17. Verfahren nach einem der Ansprüche 13 bis 16, wobei auf die auf der Trägerfolie aufgebrachte textile Struktur und optionale Polysiloxanschicht und/oder andere eine Verblockung mindernde Schicht und/oder die strukturierte Oberfläche der Trägerfolie mit optionaler Polysiloxanschicht und/oder anderer eine Verblockung mindernden Schicht eine Spachtelmasse, ein Dispersionsklebstoff und/oder ein Reaktivklebstoff aufgebracht wird.
